# EUROPEAN PATENT APPLICATION

(11) **EP 4 356 745 A1**
(43) Date of publication of application: **24.04.2024**
(21) Application number: 22203159.3
(22) Date of filing: 21.10.2022
(51) Int. Cl.: A23B 4/044, A23B 4/052

(54) **SMOKER SYSTEM**

(71) Applicant: Protech Food Machinery AB, 283 71 Lönsboda (SE)
(72) Inventor: Svensson, Mats, SE283 72 Lönsboda (SE)
(74) Representative: Industripatent i Växjö AB

(57) **Abstract**

A smoker system (1) for foodstuff, comprises a smoke generator (2), and a smoke chamber (3). A conveyor line (4a, 4b, 4c) is configured to transfer a continuous feed of the foodstuff through the smoke chamber (3) from a smoke chamber entrance to a smoke chamber exit. Preferably the smoke generator (2) is arranged outside of the smoke chamber (3) and connected thereto by a smoke conduit (8a, 8b).

## Description

### Field of the invention

The present invention relates to a smoker system for foodstuff, comprising a smoke generator, and a smoke chamber.

### Background

Foodstuffs may be smoked for different purposes and by a number of different processes. The purpose may be the preservation of a particular foodstuff over an extended time period, a manner of cooking the foodstuff, but it may also be a mere taste preference.

The temperature of the smoke, and the time during which the smoking process occurs are factors that will affect the result. Other processes, such as drying, curing with salt, and spraying or immersion in flavored liquids, may be combined with the smoking for obtaining a desired result. Also, the type of foodstuff as well as the size of the pieces thereof may affect the outcome of the smoking process.

US10271559B2 discloses one example of a smoke chamber, illustrating the general principle of smoking foodstuffs according to the prior art. A smoke generating chamber is arranged adjacent to the smoke chamber wherein the foodstuff is placed. The foodstuff remains therein until a sufficient time has passed. The smoke may be cooled, so that the smoking temperature may be regulated. The foodstuff is processed by the smoke in small batches.

In the food industry, some disadvantages may be noted when smoking large amounts of food products. The size of a smoke chamber is limited, and hence the foodstuff needs to be placed therein in batches. Typically, pieces of meat etc. may be hung on racks, which are rolled into a smoke chamber and left therein for a suitable time. Thereafter, the smoke is evacuated from the smoke chamber, before the chamber is opened and the racks are rolled out and unloaded. The procedure is not only time consuming, but also very labor intensive, which means that the cost is high. Also, the labor is repetitive and physically demanding for the workers, which means that the risk of labor related injuries is high. Another aspect is that the smoke may escape from the smoke chamber and pollute the work environment. By the same token, the contents of the smoke may soil and affect equipment as well. Hence the equipment may need frequent cleaning and the lifespan of some components may be reduced.

### Summary

It is an object of the present disclosure to solve, or at least mitigate, parts or all of the above-mentioned problems. To this end, there is provided a smoker system wherein a conveyor line is configured to transfer a continuous feed of the foodstuff through the smoke chamber from a smoke chamber entrance to a smoke chamber exit.

Hereby, a continuous smoking process for large amounts of foodstuff is allowed with a minimal manual effort. The conveyor line allows a set-up of several automated processing steps before and/or after the smoke chamber, such as drying, curing, liquid smoke processing, freezing, and packaging.

In an embodiment of the smoker system, the smoke generator is arranged outside of the smoke chamber and connected thereto by a smoke conduit.

Hereby the smoke generated by the smoke generator may affect only a limited equipment volume. A minimal volume needs to be cleaned, and the risk of equipment failure due to soiling is minimized. Also, the possibilities for regulating the amount and temperature of the smoke in the smoke chamber may be maximized.

The smoke is preferably generated by the heating of wood chips, so that a coveted, traditional smoke flavor and aroma may be attained. Wood from various tree species may be used for attaining different smoke aromas. The use of genuine wood chips in production of the smoke for the smoking procedure is of great importance also for marketing purposes. With a traditional production of the smoke, often with an identification of the wood type used, the manufacturing procedure may be truthfully described as traditional, and the eating experience may be enhanced for many customers.

In some embodiments, the smoke chamber comprises a main smoke inlet and a main smoke outlet for smoke from the smoke generator.

Hereby the separation of the smoke generator from the smoke chamber is further enhanced, and a regulation of the amount of smoke in the smoke chamber is enabled.

In further embodiments, the main smoke inlet comprises spaced-apart smoke nozzles.

Hereby the smoke may be uniformly distributed into the smoke chamber, so that the smoking of the foodstuff may be performed as efficiently and evenly as possible for an optimal and predictable smoking result.

In even further embodiments, the smoke nozzles are distributed at even distances in a vertical direction.

Hereby the smoke may reach the foodstuff evenly, during the time that the foodstuff is fed through the smoke chamber. This is of particular importance if the foodstuff is transported in a vertical direction through the smoke chamber.

In some embodiments, the main smoke outlet comprises spaced apart evacuation openings.

The evacuation openings are preferably arranged in the opposite part of the smoke chamber, as seen from the smoke inlet nozzles. Hereby the flow pattern of the smoke in the smoke chamber may be as uniform as possible.

In some embodiments, the smoke chamber entrance comprises an entrance evacuation chamber.

Hereby smoke is to a large degree prevented from escaping from the smoke chamber to the surrounding premises at the entrance of the conveyor into the smoke chamber. The air outside of the smoke chamber will maintain a low degree of pollution, and the working conditions for the personnel will be safe.

In some embodiments, the smoke chamber exit comprises an exit evacuation chamber.

Hereby smoke is to a large degree prevented from escaping from the smoke chamber to the surrounding premises at the exit of the conveyor from the smoke chamber. The air outside of the smoke chamber will maintain a low degree of pollution, and the working conditions for the personnel will be safe.

In some embodiments, the maximum capacity of the main smoke outlet is larger than the maximum capacity of the main smoke inlet.

Hereby the smoke chamber is operable with the capacity of maintaining a pressure which is lower than the atmospheric pressure on the outside of the smoke chamber, which minimizes the tendency of the smoke to escape through the smoke chamber entrance and exit, respectively.

In some embodiments, the smoker system comprises a mixing chamber arranged on the smoke conduit between the smoke generator and the smoke chamber.

Hereby the concentration of smoke may be adjusted before the smoke enters the smoke chamber.

In further embodiments, the mixing chamber comprises a heater.

Hereby the temperature of the smoke may be adjusted before the smoke enters the smoke chamber.

In still further embodiments, the smoke chamber further comprises a main smoke recirculation conduit from the smoke outlet to the smoke inlet via the mixing chamber.

Hereby the smoke may circulate efficiently in the smoke chamber around the foodstuff. Since each single volume of smoke is efficiently utilized by being recirculated into the smoke chamber, only the minimum amount of smoke needed to fill the smoke chamber has to be generated. The amount of wood material, such as wood chips or shavings, which is needed to feed the smoke generator, is hereby minimized. Hence the amount of smoke that is eventually released into the atmosphere is also minimized, as well as any effects on the environment.

In yet further embodiments, the smoker system comprises evacuation conduits from the entrance and exit evacuation chambers to the main smoke recirculation conduit.

The smoke captured by the evacuation chambers is recirculated into the smoke chamber, and hereby the concentration of smoke in the smoke chamber may be maintained.

In even further embodiments, the mixing chamber comprises a controllable fresh air inlet.

Hereby the smoke concentration in the mixing chamber, and eventually the smoke chamber, may be regulated to a desired level for the optimal smoking of the foodstuff in the smoke chamber. The inlet may be provided with a damper, a ventilator, or both, for attaining the necessary regulation.

In some embodiments, the smoke chamber comprises a controllable evacuation conduit to the ambient air.

When an evacuation of all the smoke in the smoke chamber is needed, e.g. during cleaning thereof, the flow of smoke from the smoke generator may be stopped, fresh air is introduced into the smoke chamber, while the mix of fresh air and smoke is evacuated from the smoke chamber. Since no new smoke, but only fresh air, is introduced into the smoke chamber, the concentration of smoke in the smoke chamber will gradually drop, until virtually all smoke has been evacuated. For the controllable function of the evacuation conduit, the inlet may be provided with a damper, a ventilator, or both. Another function of the evacuation conduit may be to keep the pressure in the smoke chamber at a suitable level in addition, or as an alternative, to the pressure obtained from the smoke nozzles and the evacuation openings. A suitable pressure is in most cases perceived as a pressure slightly lower than the atmospheric pressure outside the smoke chamber.

In some embodiments, the system comprises one or more dampers arranged in the smoke conduit.

Hereby a prompt and efficient regulation of the smoke concentration in the smoke chamber may be obtained.

In some embodiments, the system comprises one or more dampers arranged in the evacuation conduits.

Hereby a prompt and efficient regulation of the smoke concentration in the smoke chamber may be obtained.

In some other embodiments, the system comprises one or more dampers arranged in the air inlet.

Hereby a prompt and efficient regulation of the smoke concentration in the mixing chamber and the smoke chamber may be obtained.

In other embodiments, the system comprises one or more motors arranged to control the position of the respective dampers.

Hereby the need for manual regulation of the dampers is reduced, or completely eliminated, and the regulation is simplified. A computerized, automated regulation may be possible.

In some embodiments, ventilators are arranged in the evacuation and smoke conduits to control a circulation of smoke in the smoker system.

Hereby a prompt and efficient regulation of the smoke concentration in the smoke chamber may be obtained. The ventilators may be controlled automatically, e. g. in a computerized process.

In some embodiments, the conveyor is configured as a spiral conveyor inside the smoke chamber, extending from the entrance to the exit of the smoke chamber.

Hereby the foodstuff to be smoked may stay in the smoke chamber for a sufficiently long time, while being transported therethrough. The space needed for the smoke chamber may be kept low, while its capacity is optimal. Also, the revolving of the foodstuff around the axis of the spiral conveyor may allow for a uniform smoking result. The dimensions of the spiral conveyor may vary greatly, as well as the number of revolutions in the spiral. Preferably the number of revolutions is between 15 and 40, and more preferably between 20 and 30.

In further embodiments, a drive motor of the spiral conveyor is arranged on the outside of the smoke chamber.

Hereby the motor does not risk being soiled by the smoke, nor being subjected to unwanted downtime for repairs, cleaning etc. In a preferred embodiment, the motor is arranged on the top of the smoke chamber, with its axle arranged coaxially with the axis of rotation of the spiral conveyor.

In some embodiments, washing nozzles are arranged on the inside of the smoke chamber.

Hereby a regular and automatic cleaning of the interior of the smoke chamber and the conduits may be performed, when the smoke has been evacuated from the smoke chamber. The washing nozzles may be nozzles for water, steam, solvents, disinfectants, etc.

In some embodiments, a water drain is arranged at the floor of the smoke chamber.

Hereby any liquids, e. g. from the cleaning, may be easily drained from the smoke chamber.

It is noted that embodiments of the disclosure may be embodied by all possible combinations of features recited in the claims.

### Brief description of the drawings

The above, as well as additional objects, features and advantages of the present disclosure, will be better understood through the following illustrative and non-limiting detailed description of preferred embodiments of the present invention, with reference to the appended drawings, where the same reference numerals will be used for similar elements, wherein:
- Fig. 1: is a diagrammatic view in perspective of a smoker system and a smoke chamber according to the disclosure, wherein the outer walls have been removed for clarity; and
- Fig. 2: is a schematic plan view from above of the smoker system, wherein some ducts have been spread out for clarity.

All the figures are schematic, not necessarily to scale, and generally only show parts which are necessary in order to elucidate the embodiments, wherein other parts may be omitted.

### Detailed description of the exemplary embodiments

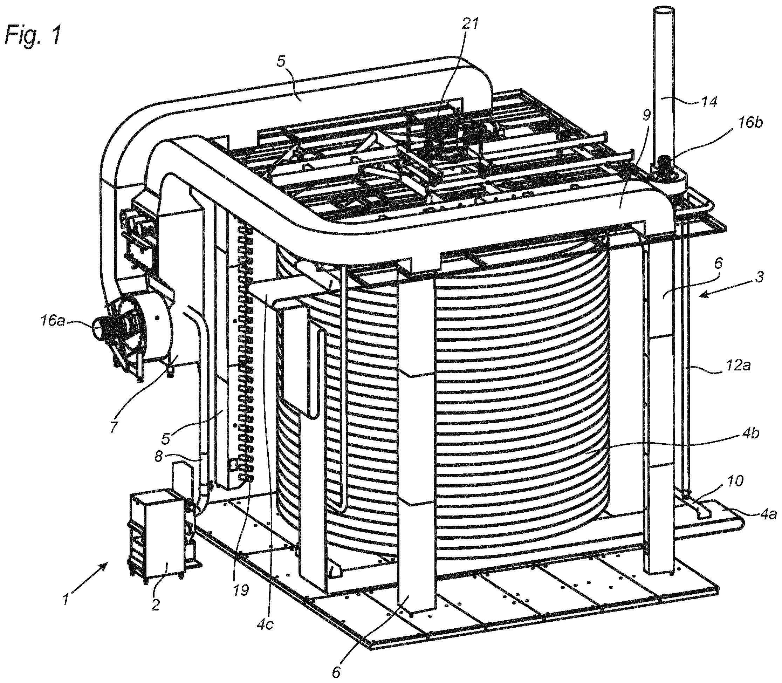

Fig. 1 illustrates the main parts of a smoker system 1, namely a smoke generator 2, a smoke chamber 3, and a conveyor system 4a, 4b, 4c.

The smoke generator 2 is connected to the smoke chamber 2 via a smoke conduit 8a, and smoke enters the smoke chamber 3 through a main smoke inlet 5. After circulation around the foodstuff on the conveyors in the conveyor system 4a, 4b, 4c, the smoke exits from the smoke chamber 3 through a main smoke outlet 6. The smoke may thereafter be recirculated through a main smoke recirculation conduit 9 and may enter the smoke chamber 3 again, possibly after mixing with new smoke from the smoke generator 2 or fresh air in a mixing chamber 7 and reheating of the mixture if needed.

The foodstuff may pass through the smoke chamber 3 during a time period which is sufficient for obtaining a desired result, in consideration of the temperature and concentration of the smoke, as well as of the portion size and pre-treatment of the foodstuff. During the passage, the foodstuff is surrounded by the circulating smoke, and the smoker system 1 may be in operation for several days at a time. During this time period, large amounts of foodstuff may be processed with just a fraction of the manual labor needed, as compared to the smoke chambers according to the prior art.

Between the periods of operation, the smoker system 1 may be cleaned. Preferably there are cleaning nozzles (not shown) arranged on the inside of the smoke chamber 3. The cleaning nozzles may dispense water, steam, dissolvents, or other cleaning agents as needed for an automatic cleaning of the smoke chamber 3.

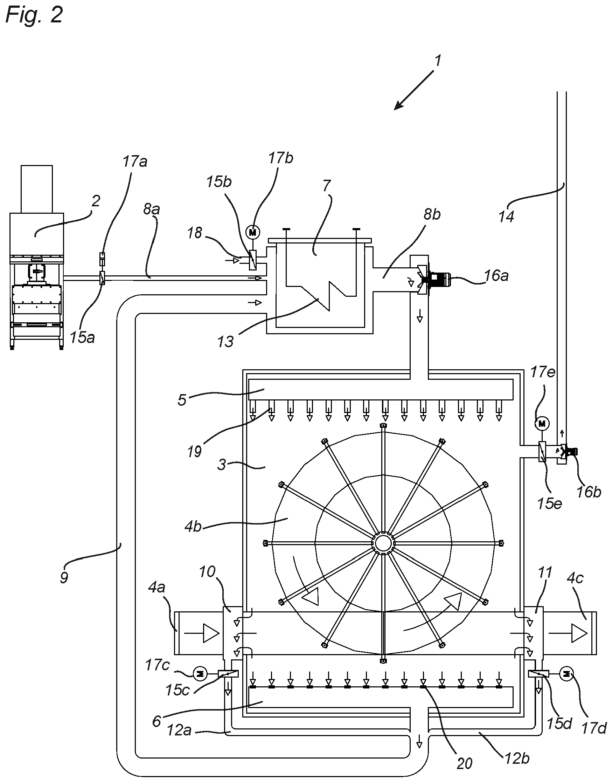

Fig. 2, which is a schematic view of the smoker system 1, shows the system 1 in a simplified, but clearer, view. For clarity, the extension of some of the conduits has been altered slightly, in order not to cover other parts of the smoker system 1 in the drawing.

The foodstuff enters the smoke chamber 3 on an entrance conveyor 4a. In a preferred embodiment, the entrance conveyor 4a is linear. The entrance conveyor 4a is converted into a spiral conveyor 4b some distance into the smoke chamber 3. The spiral conveyor 4b is arranged centrally in the smoke chamber 3. Its sides are open, so that the smoke may enter, and come into contact with the foodstuff. Also, the conveyor surface is preferably perforated or consisting of a lattice or similar, so that the smoke may easily circulate therethrough. The spiral conveyor 4b comprises a fairly large number of revolutions, typically 20-40 revolutions. For each revolution, the food on the conveyor will travel a distance in a vertical direction. In the embodiment disclosed in the drawings, the lower end of the conveyor has been designated as the entrance conveyor 4a, and the upper end as the exit conveyor 4c, but in other embodiments the travel direction may be reversed.

The speed of the conveyor 4a, 4b, 4c is variable and, as mentioned previously, determined depending on the type of foodstuff to be smoked, the preparation of the foodstuff, and the concentration of the smoke; all related to the desired result. The drive motor 21 of the conveyor 4a, 4b, 4c is arranged outside of the smoke chamber 3, and will not be subjected to the harsh and soiled environment inside the smoke chamber 3. By the same token, the motors for the dampers 15a, 15b, 15c, 15d, 15e and the ventilators 16 a, 16b are also arranged outside the smoke and evacuation conduits 8a, 8b, 12a, 12b, so that they are not soiled, and their lifespan may be as long as possible.

The smoke from the smoke generator 2 is produced in a conventional way by the burning of a wood material, such as wood chips, wood shavings, wood pellets, etc. at a suitable temperature and with a suitable supply of oxygen, to produce a smoke with desired properties. The person skilled in the art is aware of the factors affecting the properties of the smoke and will be able to regulate the smoke generator 2 accordingly. In some embodiments the smoke from the smoke generator 2 may be mixed with recirculated smoke, with slightly different properties. The properties of the mixture may deviate from the smoke directly from the smoke generator 2, and the properties of the smoke directly from the smoke generator 2 may be altered in the aspects necessary to compensate therefor.

The first part 8a of the smoke conduit 8 extends from the smoke generator 2 to the mixing chamber 7, and a damper 15a is arranged thereon for regulation of the flow of smoke. When the newly produced, "fresh" smoke enters the mixing chamber 7 it will be mixed with recirculated smoke, entering the chamber via the main smoke recirculation conduit 9. The recirculated smoke has already passed through the smoke chamber 3 at least once. The resulting mixture may need to be altered, as mentioned above. For this purpose, there may be a heater 13 in the mixing chamber and a fresh air inlet 18 into the mixing chamber 7. A damper 15b may be arranged on the fresh air inlet 18 for the regulation of the flow of fresh air into the mixing chamber 7. In order to automatize the regulation, a motor 17a, 17b may be arranged on either or both of the dampers 15a, 15b for the regulation of the flow of smoke and fresh air into the mixing chamber 7.

A second part 8b of the smoke conduit is arranged for conducting the smoke mixture from the mixing chamber 7 to the main smoke inlet 5. In the embodiment disclosed in Fig. 2, a ventilator 16a is arranged in the smoke conduit 8b, to maintain a sufficient flow of the smoke mixture into the smoke chamber 3 via the main smoke inlet 5.

The main smoke inlet 5 is provided with a number of spaced-apart nozzles 19 through which the smoke enters the smoke chamber 3. As seen in Fig. 1, the nozzles 19 are preferably arranged at fairly even distances in the vertical direction. One column of nozzles 19 is visible in Fig. 1, but there may be several columns of nozzles 19 arranged side by side in the smoke chamber 3. Fig. 2 may be perceived as such an arrangement as seen from above, but it may also be interpreted as a schematic illustration, where a single vertical row of nozzles 19 has been drawn horizontally for the purpose of clarity. Both of these interpretations, as well as any variants with just a few (two, three, four, etc.) rows of nozzles 19, are all embodiments which are covered by this disclosure. The arrangement of nozzles 19, especially in the vertical direction, may provide an even distribution of smoke on all the revolutions of the spiral conveyor 4b.

On an opposite side of the smoke chamber 3, a number of evacuation openings 20 are distributed on the main smoke outlet 6. As discussed above for the nozzles 19 on the main smoke inlet 5, they may be distributed in one or more vertical columns, and even in a large number of columns. All possible interpretations of the figures, and variants therebetween are included in this disclosure as possible embodiments. The uniform vertical distribution of the evacuation openings 20 cooperates with the uniform vertical distribution of the nozzles 19 to achieve a uniform distribution and circulation of smoke in the smoke chamber 3, so that all the revolutions of the spiral conveyor 4b are subjected to the smoke.

The pressure in the smoke chamber 3 is preferably slightly lower than the atmospheric pressure outside of the smoke chamber 3, to minimize the risk of smoke escaping from the smoke chamber 3 and polluting the air in the work premises. In order to accomplish this, the inlet of smoke should be balanced against the outlet. It is advantageous that the main smoke outlet 6 has a maximum capacity that is slightly larger than the maximum capacity of the main smoke outlet 5.

A main smoke recirculation conduit 9 extends from the main smoke outlet 6 back to the mixing chamber 7. The smoke evacuated from the smoke chamber 3 through the evacuation openings 20 may be drawn back to the mixing chamber 7, in particular under the influence of the ventilator 16a. The recirculated smoke may there be mixed with "fresh" smoke from the smoke generator 2 and fresh air from the fresh air inlet 18 and heated by the heater 13 if necessary, as described above.

At the opening for the entrance conveyor 4a into the smoke chamber 3, an entrance evacuation chamber 10 is arranged for preventing smoke from the smoke chamber 3 from escaping into the surrounding premises. The entrance evacuation chamber 10 may be a hood or frame arranged along one or more edges of the entrance opening. Likewise, there is an exit evacuation chamber 11, with a similar configuration, at the opening for the exit conveyor 4c.

A secondary evacuation conduit 12a, 12b extends from each of the entrance and exit evacuation chambers 10,11. Each of the secondary evacuation conduits 12a, 12b is connected to the main smoke recirculation conduit 9, so that the smoke collected by the entrance and exit evacuation chambers 12a, 12b may be led back to the mixing chamber 7 and reintroduced into the smoke chamber 3.

There may be a pressure in the entrance and evacuation chambers 10, 11 that is slightly lower than that of the smoke chamber 3, i. e. a suction, such that any smoke about to escape from the smoke chamber 3 may be collected. Meanwhile, the suction may not be higher than that from the evacuation openings 20 on the main smoke outlet 6. Hereby the smoke in the smoke chamber 3 may primarily be evacuated by the main smoke outlet 6, and only excess smoke leaking out of the entrance and exit for the conveyor may be collected by the entrance and exit evacuation chambers 10, 11.

The low pressure in the entrance and exit evacuation chambers 10, 11 is derived from the ventilator 16a. A damper 15c, 15d is arranged in each of the secondary evacuation conduits 12a, 12b to regulate the pressure in the entrance and evacuation chambers 10, 11, so that it is not lower than the pressure in the main smoke outlet 6, which is directly coupled to the ventilator 16a. Motors 17c, 17d may be arranged on the respective dampers 15c, 15d, to enable an automatization of the regulation of the smoke flow in the smoker system 1.

The smoke chamber 3 needs a periodical cleaning. Although the smoking process may be performed in a continuous manner rather than in batches, the smoke may still cause some residue on the inside of the smoke chamber 3 and the conveyor 4a, 4b, 4c, and this fact necessitates a cleaning. In practical tests, the smoking process has been able to run continuously for several days at a time, before cleaning is necessary. Cleaning of the smoke chamber 3 may be performed manually, but in order to make the cleaning of the smoker system 1 easy and minimally labor-intensive, there may be technical features and devices provided therefor.

An evacuation conduit 14 is arranged in a wall of the smoke chamber 3 for removal of the smoke in the smoke chamber 3. The evacuation conduit is not only provided with a damper 15e that may be closed or opened, preferably with the aid of a motor 17e. Outside of the damper 15e, as seen from the smoke chamber 3, a ventilator 16b is arranged in the evacuation conduit 14.

The evacuation conduit 14 with its damper 15e and ventilation 16b may be used to balance the pressure in the smoke chamber 3, so that smoke does not unnecessarily escape to the work premises outside of the smoke chamber 3. If the pressure in the smoke chamber 3 exceeds a predetermined level, some of the smoke may be evacuated through the evacuation conduit 14, until the pressure in the smoke chamber 3 is sufficiently lowered.

In order to evacuate the smoke from the smoke chamber 3, the damper 15a in the smoke conduit 8a is preferably first closed to stop the smoke from the smoke generator 2. The damper 15b in the fresh air inlet 18 to the mixing chamber 7 is preferably opened, for compensation of the lacking inflow of smoke. Then the ventilator 16b in the evacuation conduit 14 may be started. The smoke in the smoke chamber 3 may then be evacuated gradually through the evacuation conduit 14 to the outside, preferably via a flue gas cleaning system (not shown). At the same time more and more fresh air is drawn into the mixing chamber 7 through the fresh air inlet. Also, air may be drawn into the smoke chamber 3 through the conveyor entrance and exit from the ambient premises. Hereby a flow of air, with gradually less smoke in it, may be maintained through the smoker system 1, and the smoke may eventually be fully evacuated from the smoke chamber 3.

For an automated cleaning of the smoke chamber 3, a number of nozzles (not shown in the figures) for water, steam, dissolvents, or other cleaning agents may be arranged on the inner walls and ceiling of the smoke chamber 3. The different cleaning agents may be applied to the inside of the smoke chamber 3 in turn, to form a cleaning cycle. The cleaning may include a circulation of steam and mists of cleaning agents in the smoke, recirculation and evacuation conduits 8b, 9, 12a, 12b, 14, with the aid of the dampers 15b, 15c, 15d, 15e and ventilators 16a, 16b, which will be cleaned as well.

The liquids used in the cleaning may gather at the floor of the smoke chamber 3. Preferably there may be a drain at a low point on the floor of the smoke chamber 3, for easy removal of the liquids and residue from the smoke chamber 3.

After the cleaning cycle has been completed, the continuous smoking process may be restarted and run again for another time period, typically a few days. This allows for an efficient procedure wherein only a limited amount of manual labor is needed and most of the physically demanding work operations have been eliminated. The work environment is improved, and over time the production costs may be beneficial as compared with the prior art.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. Smoker system (1) for foodstuff, comprising a smoke generator (2), and a smoke chamber (3), wherein a conveyor line (4a, 4b, 4c) is configured to transfer a continuous feed of the foodstuff through the smoke chamber (3) from a smoke chamber entrance to a smoke chamber exit.

2. Smoker system (1) according to claim 1, wherein the smoke generator (2) is arranged outside of the smoke chamber (3) and connected thereto by a smoke conduit (8a, 8b).

3. Smoker system (1) according to claim 1 or claim 2, wherein the smoke chamber (3) comprises a main smoke inlet (5) and a main smoke outlet (6) for smoke from the smoke generator (2).

4. Smoker system (1) according to claim 3, wherein the main smoke inlet (5) comprises spaced-apart smoke nozzles (19).

5. Smoker system (1) according to claim 3 or 4, wherein the main smoke outlet (6) comprises spaced apart evacuation openings (20).

6. Smoker system (1) according to any of the preceding claims, wherein the smoke chamber entrance and the smoke chamber exit comprise an entrance evacuation chamber (10) and an exit evacuation chamber (11) respectively.

7. Smoker system (1) according to any of claims 3 to 5, wherein the maximum capacity of the main smoke outlet (6) is larger than the maximum capacity of the main smoke inlet (5).

8. Smoker system (1) according to claim 2, wherein the smoker system (1) comprises a mixing chamber (7) arranged on the smoke conduit (8a, 8b) between the smoke generator (2) and the smoke chamber (3).

9. Smoker system (1) according to claim 8, wherein the mixing chamber (7) comprises a heater (13).

10. Smoker system (1) according to claim 8 or claim 9, wherein the smoke chamber (3) further comprises a main smoke recirculation conduit (9) from the smoke outlet (6) to the smoke inlet (5) via the mixing chamber (7).

11. Smoker system (1) according to claim 10, wherein the smoker system (1) comprises secondary recirculation conduits (12a, 12b) from the entrance and exit evacuation chambers (10, 11) to the main smoke recirculation conduit (9).

12. Smoker system (1) according to any of claims 8 to 11, wherein the mixing chamber (7) comprises a controllable fresh air inlet (18).

13. Smoker system (1) according to any of the preceding claims, wherein the smoke chamber (3) comprises a controllable evacuation conduit (14) to the ambient air.

14. Smoker system (1) according to any of claims 2, 11 or 13, wherein the system (1) comprises one or more dampers (15a, 15c, 15d, 15e) arranged in one or more of the conduits.

15. Smoker system (1) according to claim 12, wherein the system (1) comprises one or more dampers (15b) arranged in the air inlet (18).

16. Smoker system (1) according to claim 14 or claim 15, wherein the system (1) comprises one or more motors (17a, 17b, 17c, 17d, 17e) arranged to control the position of the respective dampers (15a, 15b, 15c, 15d, 15e).

17. Smoker system (19) according to claim 10 or claim 11, wherein ventilators (16a, 16b) are arranged in the evacuation and smoke conduits (8b, 14) to control a circulation of smoke in the smoker system (1).

18. Smoker system (1) according to any of the preceding claims, wherein the conveyor (4a, 4b, 4c) is configured as a spiral conveyor (4b) inside the smoke chamber (3), extending from the entrance to the exit of the smoke chamber (3).

19. Smoker system (1) according to claim 18, wherein a drive motor (21) of the spiral conveyor (4b) is arranged on the outside of the smoke chamber (3).

20. Smoker system (1) according to any of the preceding claims, wherein washing nozzles are arranged on the inside of the smoke chamber (3).

21. Smoker system (1) according to any of the preceding claims, wherein a water drain is arranged at the floor of the smoke chamber (3).
